# EUROPÄISCHE PATENTSCHRIFT

(11) **EP 4 417 942 B1**
(45) Veröffentlichungstag und Bekanntmachung des Hinweises auf die Patenterteilung: **03.09.2025**
(21) Anmeldenummer: 24157493.8
(22) Anmeldetag: 14.02.2024
(51) Int. Cl.: G01D 5/244, G01D 3/02, G01D 5/347

(54) **VERFAHREN UND VORRICHTUNG ZUR KALIBRIERUNG EINES GERÄTS ZUR POSITIONSMESSUNG SOWIE GERÄT ZUR POSITIONSMESSUNG**
METHOD AND DEVICE FOR CALIBRATING A POSITION MEASURING DEVICE AND POSITION MEASURING DEVICE
PROCÉDÉ ET DISPOSITIF D'ÉTALONNAGE D'UN APPAREIL DE MESURE DE POSITION ET APPAREIL DE MESURE DE POSITION

(30) Priorität: 17.02.2023 DE 102023104006
(43) Veröffentlichungstag der Anmeldung: 21.08.2024
(73) Patentinhaber: SICK AG, 79183 Waldkirch (DE)
(72) Erfinder: Dr. Hirmer, Katrin, 78166 Donaueschingen (DE); Dr. Hopp, David, 78166 Donaueschingen (DE); Thomae, Dominic, 79111 Freiburg (DE)
(74) Vertreter: Manitz Finsterwald Patent- und Rechtsanwaltspartnerschaft mbB

(56) Entgegenhaltungen:
- EP-B1- 2 245 428
- JP-Y2- H 086 259
- US-A1- 2008 148 808

## Beschreibung

Die Erfindung betrifft ein Verfahren und eine Vorrichtung zur Kalibrierung eines Geräts zur Positionsmessung sowie ein Gerät zur Positionsmessung.

Geräte zur Positionsmessung können zueinander bewegliche Komponenten umfassen, wie beispielsweise einen Sendebereich, einen Empfangsbereich und einen Codebereich, die derart zueinander beweglich sind, dass sich durch Verschiebung der Komponenten relativ zueinander ein durch den Sendebereich ausgesendetes Signal durch ein in dem Codebereich verkörpertes Muster derart beeinflusst wird, dass dieses Muster am Empfangsbereich empfangen wird und so eine Position bestimmt werden kann.

Insbesondere sind solche Geräte zur Positionsmessung bekannt, die sowohl einen oder mehrere Absolutpositionsbereiche als auch einen oder mehrere Relativpositionsbereiche umfassen, wobei eine gröbere, absolute Positionsmessung mit einer geringeren Auflösung und eine feinere, relative Positionsmessung mit einer höheren Auflösung erfolgen kann.

Die mechanisch genaue Ausrichtung und Relativposition der Komponenten solcher Geräte ist dabei entscheidend für die Funktion und eine hinreichende Signalqualität. Insbesondere ist die Relativposition zwischen dem Codebereich und dem Empfangsbereich wichtig für eine gute Positionsmessung. Aufgrund von mechanischen Fertigungstoleranzen und insbesondere bei manuell zusammengesetzten Komponenten ist diese jedoch regelmäßig fehleranfällig.

Aus der Druckschrift EP 2 245 428 B1 ist beispielsweise eine Maßverkörperung, eine Messeinrichtung und ein Messverfahren zur Absolutpositionsbestimmung bekannt.

Es ist eine Aufgabe, ein verbessertes Verfahren und eine verbesserte Vorrichtung zur Kalibrierung eines Geräts zur Positionsmessung anzugeben.

Diese Aufgabe wird gelöst durch den Gegenstand der unabhängigen Ansprüche.

Gemäß einem ersten Aspekt wird ein Verfahren zur Kalibrierung eines Geräts zur Positionsmessung bereitgestellt.

Das Verfahren umfasst dabei die Schritte Erfassen eines ersten Absolutpositionssignals, Erfassen eines ersten Werts eines Relativpositionssignals bei einer ersten Änderung des ersten Absolutpositionssignals, Berechnen eines ersten Korrekturwerts basierend auf dem ersten Wert des Relativpositionssignals und Verwenden des ersten Korrekturwerts zur Korrektur einer Positionsmessung des Geräts.

Das Verfahren dient dabei der Kalibrierung eines Geräts zur Positionsmessung. Ein Kalibrieren meint vorliegend insbesondere das Erfassen und Korrigieren eines oder mehrerer Messungenauigkeiten und/oder Messtoleranzen des Geräts zur Positionsmessung.

Eine Positionsmessung umfasst vorliegend eine Messung und/oder Erfassung einer absoluten Position, einer relativen Position, eines Winkels und/oder eines Abstands, insbesondere einer linearen Position. Insbesondere ein Winkel und/oder ein Abstand lässt sich bei bekannten räumlichen Verhältnissen aus beispielsweise zwei Positionswerten ableiten.

Das Gerät zur Positionsmessung kann dabei auch als Encoder oder Drehgeber bezeichnet werden und weist einen Sendebereich und einen Empfangsbereich sowie einen Codebereich auf, die relativ zueinander beweglich sind. Insbesondere kann es sich bei dem Gerät um ein sogenanntes Motor-Feedback-Gerät handeln, bei dem eine Positionsänderung auf Basis der Positionsmessung gesteuert und/oder verifiziert wird.

Das Gerät zur Positionsmessung kann beispielsweise als optisches, magnetisches, kapazitives oder induktives Messgerät ausgebildet sein. Der Sende- und der Codebereich kann dabei als ein einziger Bereich ausgebildet sein, beispielsweise bei magnetischen, kapazitiven und/oder induktiven Messverfahren. Im Folgenden wird insbesondere auf eine optische Positionsmessung eingegangen, wobei die Ausführungen gleichermaßen für andere Messformen gelten.

Dazu weist der Sendebereich ein oder mehrere Lichtsendeelemente, wie beispielsweise Leuchtdioden auf und der Empfangsbereich, der auch als Erfassungsbereich bezeichnet werden kann, ein oder mehrere Lichtempfangselemente, wie beispielsweise Photodioden, die auch als Erfassungselemente bezeichnet werden können. Der Codebereich umfasst ein oder mehrere Codewörter, die aus lichtdurchlässigen und lichtundurchlässigen Abschnitten, aus Abschnitten mit stärkerer und schwächerer Lichtremission und/oder aus Abschnitten mit stärkerer und schwächerer Lichtreflexion, gebildet sein können, wobei abhängig von dem Codewort dann eine Relativposition und/oder eine Absolutposition erfasst werden kann. Insbesondere ist ein erster Abschnitt vorgesehen, der eine Relativposition erfasst bzw. durch den ein Relativpositionssignal erfasst werden kann, und ein zweiter Abschnitt, der eine Absolutposition erfasst bzw. durch den ein Absolutpositionssignal erfasst werden kann, die dem Verfahren zugrunde liegen.

Das Verfahren erfasst dabei ein erstes Absolutpositionssignal. Das Erfassen des ersten Absolutpositionssignals erfolgt dabei insbesondere kontinuierlich, wiederholt und/oder periodisch. Insbesondere wird das erste Absolutpositionssignal dauerhaft, wiederholt und/oder regelmäßig erfasst, sodass sich ein Verlauf des ersten Absolutpositionssignals ergibt bzw. dem Verfahren zugrunde gelegt wird.

Das Verfahren erfasst auch einen ersten Wert eines Relativpositionssignals und zwar zu dem Zeitpunkt, wenn sich das erste Absolutpositionssignal ändert. Eine Änderung umfasst vorliegend insbesondere eine Erhöhung und/oder Verringerung des erfassten Werts des ersten Absolutpositionssignals, insbesondere eine Erhöhung und/oder Verringerung, die größer ist als ein vorbestimmter Schwellenwert. Das Relativpositionssignal kann sich dabei kontinuierlich, insbesondere periodisch ändern, beispielsweise gemäß eines sägezahn- oder sinusförmigen Verlaufs, und es wird durch diese Erfassung des Relativpositionssignals ein erster Wert zu dem Zeitpunkt, wenn sich das Absolutpositionssignal ändert, erfasst. Das Relativpositionssignal kann insbesondere zwischen zwei direkt benachbarten Absolutpositionen einmal seinen vollständigen Wertebereich durchlaufen.

Das Verfahren umfasst auch ein Berechnen eines ersten Korrekturwerts basierend auf dem ersten Wert des Relativpositionssignals und optional basierend auf dem ersten Absolutpositionssignal. Insbesondere umfasst das Berechnen des ersten Korrekturwerts ein Berechnen einer Abweichung des zum Zeitpunkt der Änderung des ersten Absolutpositionssignals erfassten ersten Werts des Relativpositionssignals von einem vorbestimmten Wert des Relativpositionssignals. Insbesondere kann es sich bei dem vorbestimmten Wert des Relativpositionssignals um einen Maximalwert und/oder einen Minimalwert des Relativpositionssignals handeln.

Das Verfahren umfasst auch das Verwenden des ersten Korrekturwerts zur Korrektur einer Positionsmessung des Geräts. Insbesondere kann der erste Korrekturwert dazu verwendet werden, das Relativpositionssignal und/oder das erste Absolutpositionssignal zu korrigieren, weiter insbesondere um den ersten Korrekturwert.

Durch das Verfahren wird es ermöglicht, eine besonders einfache und integrierte Selbstkalibrierung durchzuführen. Dies ist insbesondere vorteilhaft für solche Geräte, die nicht bereits vollständig montiert ausgeliefert werden und somit bereits ab Werk kalibriert werden können, sondern die in Bauteilen, als Bausatz oder Kit ausgeliefert werden und beim Kunden zusammengesetzt werden.

Es können dadurch größere Fertigungstoleranzen einzelner Komponenten in Kauf genommen werden, was die Herstellungskosten reduziert.

Darüber hinaus wird durch das Verfahren ermöglicht, dass das Gerät ohne weitere Hilfsmittel oder Werkzeuge kalibriert werden kann. Darüber hinaus stellt das Verfahren sowohl eine Lösung für eine erstmalige Kalibrierung als auch für eine regelmäßige Überwachung der Kalibrierung bereit.

Auch ermöglicht das Verfahren eine Verschlechterung einzelner Komponenten bereits vorherzusehen und abhelfend einzugreifen, wodurch einem Komponentenausfall vorgebeugt werden kann.

Insbesondere ermöglicht es die Erfindung, ein effizientes Verfahren zur Kalibrierung durchzuführen, da letztlich z.B. nur ein Korrekturwert oder nur ein erster und ein zweiter Korrekturwert benötigt werden. Wie später noch genauer ausgeführt wird, kann gemäß einer Weiterbildung durch das "Sammeln" von Minimal- und Maximal-Werten der Abweichungen die Datenmenge und damit den Auswerteaufwand erheblich reduziert, sodass durch das Sammeln der Werte der Aufwand für die eigentliche Korrektur deutlich verringert wird, da die Vielzahl der gesammelten Werte letztlich wiederum in eine geringe Anzahl an Korrekturwerten Eingang findet.

Eine Weiterbildung des Verfahrens sieht vor, dass das Verfahren weiter ein Erfassen eines zweiten Werts des Relativpositionssignals bei einer zweiten, d.h. anderen, von der ersten Änderung verschiedenen Änderung des ersten Absolutpositionssignals umfasst wobei das Berechnen des ersten Korrekturwerts basierend auf dem ersten und dem zweiten Wert des Relativpositionssignals erfolgt.

Es wird somit gemäß dieser Weiterbildung ein zweiter Wert des Relativpositionssignals erfasst und zwar dann, wenn sich das erste Absolutpositionssignal erneut ändert. Insbesondere handelt es sich bei der zweiten Änderung des ersten Absolutpositionssignals um eine auf die erste Änderung folgende Änderung, insbesondere eine unmittelbar darauffolgende Änderung des ersten Absolutpositionssignals. Alternativ kann auch eine Änderung übersprungen, d.h. nicht erfasst werden, insbesondere bei schnellen Bewegungen des Sendebereichs, des Empfangsbereichs und/oder des Codebereichs zueinander.

Insbesondere handelt es sich bei der zweiten Änderung auch um eine Erhöhung und/oder Verringerung des erfassten Werts des ersten Absolutpositionssignals, insbesondere eine Erhöhung und/oder Verringerung, die größer ist als ein vorbestimmter Schwellenwert.

Weiter insbesondere handelt es sich bei der zweiten Änderung um eine zu der ersten Änderung entgegengesetzte Änderung. Wenn es sich beispielsweise bei der ersten Änderung um eine Erhöhung des ersten Absolutpositionssignals handelt, kann es sich bei der zweiten Änderung insbesondere um eine Verringerung des ersten Absolutpositionssignals handeln und/oder anders herum.

Zum Zeitpunkt des Auftretens dieser zweiten Änderung wird dann ein zweiter Wert desselben Relativpositionsignals erfasst und dieser zweite Wert des Relativpositionssignals dazu verwendet, gemeinsam mit dem ersten, insbesondere zuvor erfassten Wert des Relativpositionssignals, den ersten Korrekturwert zu ermitteln.

Durch diese Weiterbildung wird eine besonders genau Ermittlung des Korrekturwerts ermöglicht. Insbesondere kann durch Verwendung des ersten und zweiten Werts eine Redundanz und/oder eine Plausibilitätsprüfung ermöglicht werden.

Eine Weiterbildung des Verfahrens sieht vor, dass das Berechnen des ersten Korrekturwerts eine Mittelwertbildung des ersten und des zweiten Werts des Relativpositionssignals umfasst.

Insbesondere kann das Berechnen des ersten Korrekturwerts eine Summenbildung des ersten und zweiten Werts des Relativpositionssignals und eine Division durch zwei umfassen.

Durch Mittelwertbildung können mehrere Werte berücksichtigt werden und somit ein globaler Korrekturwert ermittelt werden, der sich im Mittel korrekt auf die Positionserfassung auswirken kann.

Eine Weiterbildung des Verfahrens sieht vor, dass das Verfahren weiter die Schritte umfasst: Erfassen eines zweiten Absolutpositionssignals, Erfassen eines dritten Werts des Relativpositionssignals bei einer ersten Änderung des zweiten Absolutpositionssignals, Berechnen eines zweiten Korrekturwerts basierend auf dem dritten Wert des Relativpositionssignals und Verwenden des zweiten Korrekturwerts zur Korrektur einer Positionsmessung des Geräts.

Es wird gemäß dieser Weiterbildung somit ein zweites Absolutpositionssignal erfasst, das von dem ersten Absolutpositionssignal verschieden ist. Insbesondere basiert das zweite Absolutpositionssignal auf von dem ersten Absolutpositionssignal verschiedenen Komponenten, wie beispielsweise verschiedenen Lichtsende-, Lichtleit- oder Codeelementen (beispielsweise den in der Figurenbeschreibung genannten even- und odd-Dioden).

Es werden somit zwei voneinander getrennte Absolutpositionssignale betrachtet.

Eine Weiterbildung des Verfahrens sieht vor, dass das Verfahren weiter die Schritte umfasst: Erfassen eines vierten Werts des Relativpositionssignals bei einer zweiten Änderung des zweiten Absolutpositionssignals, wobei das Berechnen des zweiten Korrekturwerts basierend auf dem dritten und dem vierten Wert des Relativpositionssignals erfolgt.

Eine Weiterbildung des Verfahrens sieht vor, dass das Berechnen des zweiten Korrekturwerts eine Mittelwertbildung des dritten und des vierten Werts des Relativpositionssignals umfasst.

Es werden somit zwei verschiedene Signalformen von zwei unterschiedliche Absolutpositionssignalen berücksichtigt bzw. ausgewertet.

Eine Weiterbildung des Verfahrens sieht vor, dass das Verfahren weiter die Schritte umfasst: Vergleichen des ersten Werts des Relativpositionssignals mit einem vorbestimmten minimalen Wert des Relativpositionssignals und, wenn der erste Wert des Relativpositionssignals kleiner ist als der vorbestimmte minimale Wert des Relativpositionssignals, Speichern des ersten Werts des Relativpositionssignals als der vorbestimmte minimale Wert des Relativpositionssignals, wobei das Berechnen des ersten Korrekturwerts basierend auf dem vorbestimmten minimalen Wert des Relativpositionssignals erfolgt.

Es wird somit der vorbestimmte minimale Wert des Relativpositionssignals mit dem erfassten, kleineren Wert des Relativpositionssignals überschrieben und somit ein neuer vorbestimmter minimaler Wert des Relativpositionssignals gespeichert.

Für den Fall, dass der erste Wert des Relativpositionssignals nicht kleiner ist als der vorbestimmte minimale Wert des Relativpositionssignals ist, wird nichts unternommen. Insbesondere kann der vorbestimmte minimale Wert des Relativpositionssignals nicht geändert werden. Weiter insbesondere kann der erste Korrekturwert in diesem Fall nicht neu berechnet werden.

Eine Weiterbildung des Verfahrens sieht vor, dass das Verfahren weiter die Schritte umfasst: Vergleichen des ersten Werts des Relativpositionssignals mit einem vorbestimmten maximalen Wert des Relativpositionssignals und, wenn der erste Wert des Relativpositionssignals größer ist als der vorbestimmte maximale Wert des Relativpositionssignals, Speichern des ersten Werts des Relativpositionssignals als der vorbestimmte maximale Wert des Relativpositionssignals, wobei das Berechnen des ersten Korrekturwerts basierend auf dem vorbestimmten maximalen Wert des Relativpositionssignals erfolgt.

Es wird somit der vorbestimmte maximale Wert des Relativpositionssignals mit dem erfassten, größeren Wert des Relativpositionssignals überschrieben und somit ein neuer vorbestimmter maximaler Wert des Relativpositionssignals gespeichert.

Für den Fall, dass der erste Wert des Relativpositionssignals nicht größer als der vorbestimmte maximale Wert des Relativpositionssignals ist, kann ebenfalls nichts unternommen werden. Insbesondere kann der vorbestimmte maximale Wert des Relativpositionssignals nicht geändert werden. Weiter insbesondere kann der erste Korrekturwert in diesem Fall nicht neu berechnet werden.

Insbesondere wird iterativ der vorbestimmte Minimalwert und/oder der vorbestimmte Maximalwert ermittelt und gegebenenfalls angepasst. Es werden somit eine Menge an Minimalwerten und/oder eine Menge an Maximalwerten erfasst, die gesammelt werden und iterativ die Grundlage für den vorbestimmten Minimalwert und/oder den vorbestimmten Maximalwert bilden. Durch das "Sammeln" von Minimal- und Maximal-Werten der Abweichungen wird der Aufwand für die eigentliche Korrektur deutlich verringert.

Beispielsweise werden zumindest 2, 3, 4, 8, 16 oder 32 Werte (oder noch mehr) für den Minimalwert und/oder den Maximalwert als Grundlage erfasst sowie mit dem vorbestimmten Minimalwert und/oder Maximalwert verglichen, um diesen anzupassen. Insbesondere können zunächst eine Anzahl von Werten erfasst werden, bevor diese zum ersten Mal verglichen werden.

Es wird somit wird eine besonders genaue Ermittlung des Minimalwerts und/oder der Maximalwerts ermöglicht. Insbesondere wird diesem auch als Kalibrierungsphase bezeichneten Betrieb durch das iterative Wiederholen und Anpassen des minimalen und/oder maximalen Werts eine besonders präzise Bestimmung des Korrekturwerts und damit auch eine besonders fehlerfreie Korrektur ermöglicht.

Auf der anderen Seite wird der vorbestimmte Minimalwert und/oder der vorbestimmte Maximalwert - mit Ausnahme der zuvor erläuterten anfänglichen Kalibrierungsphase - im Normalbetrieb nur dann angepasst bzw. neu gespeichert, wenn sich dieser ändert, insbesondere wenn ein größerer Wert als der maximale Wert und/oder ein kleinerer Wert als der minimale Wert erfasst wird.

Dies erfolgt insbesondere dann, wenn sich einzelnen Komponenten zueinander verschoben haben oder eine Verschlechterung einzelner Komponenten eingetreten ist, auf die dann besonders schnell reagiert werden kann.

Es ergibt sich im Normalbetrieb somit eine besonders effiziente Lösung, mit der die lediglich bei einer Veränderung der Werte eingegriffen werden muss und somit die zu verarbeitende Datenmenge reduziert und der Auswerteaufwand signifikant verringert wird.

Eine Weiterbildung des Verfahrens sieht vor, dass das Berechnen des ersten Korrekturwerts eine Mittelwertbildung des vorbestimmte minimalen Werts und des vorbestimmten maximalen Werts des Relativpositionssignals umfasst.

Es versteht sich, dass das Vorbeschriebene gleichermaßen für den zweiten Wert des Relativpositionssignals gilt und ebenso für den dritten und vierten Wert des Relativpositionssignals, die jeweils mit einem vorbestimmten minimalen und/oder maximalen Wert verglichen und bei Über- bzw. Unterschreitung gespeichert werden können.

Es wird somit ein besonders adaptives Verfahren bereitgestellt, das sich selbst regelmäßig nachjustiert und auch auf Änderungen, insbesondere des Geräts bzw. dessen Komponenten reagieren kann.

Eine Weiterbildung des Verfahrens sieht vor, dass es sich bei der ersten Änderung des ersten Absolutpositionssignals um eine steigende Flanke des ersten Absolutpositionssignals handelt.

Eine Weiterbildung des Verfahrens sieht vor, dass es sich bei der zweiten Änderung des ersten Absolutpositionssignals um eine fallende Flanke des ersten Absolutpositionssignals handelt.

Eine Weiterbildung des Verfahrens sieht vor, dass es sich bei der ersten Änderung des zweiten Absolutpositionssignals um eine fallende Flanke des zweiten Absolutpositionssignals handelt.

Eine Weiterbildung des Verfahrens sieht vor, dass es sich bei der zweiten Änderung des zweiten Absolutpositionssignals um eine steigende Flanke des zweiten Absolutpositionssignals handelt.

Dadurch, dass jeweils lediglich eine Flanke, insbesondere die steigende und fallende Flanke des ersten Absolutpositionssignals und die fallende und steigende Flanke des zweiten Absolutpositionssignals verwendet wird, wird es ermöglicht, dass das Verfahren drehzahlunabhängig durchgeführt werden kann, also sowohl bei langsamen als auch schnellen Drehzahlen zuverlässig funktioniert. Auch sind Drehzahlschwankungen für die Flankennutzung unerheblich.

Somit wird ein besonders robustes und autarkes Verfahren ermöglicht.

Dadurch, dass für jedes Absolutpositionssignal sowohl eine steigende als auch eine fallende Flanke erfasst wird, kann ein Tastverhältnis bestimmt werden und eine weitergehende Korrektur wird ermöglicht, wie unten noch genauer ausgeführt wird.

Eine Weiterbildung des Verfahrens sieht vor, dass der erste und/oder zweite Korrekturwert verwendet wird, um einen Erfassungsschwellenwert des ersten Absolutpositionssignals und/oder des zweiten Absolutpositionssignals zu korrigieren.

Insbesondere handelt es sich bei dem Erfassungsschwellenwert um einen Erfassungsschwellenwert eines Analog-Digital-Umsetzers, insbesondere eines Analog-Digital-Umsetzers, der mit einem oder mehreren Lichtempfangselementen gekoppelt ist und der das von diesem oder diesen empfangene, analoge Lichtsignal in ein digitales Signal umwandelt. Weiter insbesondere handelt es sich um einen Erfassungsschwellenwert eines Analog-Digital-Umsetzers, der das erste und/oder zweite Absolutpositionssignal erfasst und/oder umwandelt.

Insbesondere kann so, wie bereits zuvor beschrieben, ein Tastverhältnis bestimmt werden, worauf basierend ein Erfassungsschwellenwert ermittelt und korrigiert werden kann. Diese Art der Korrektur kann auch als Thresholdkorrektur bezeichnet werden und dient insbesondere dazu, die Erfassungselemente optimal auszuwerten.

Alternativ oder zusätzlich sieht eine Weiterbildung des Verfahrens vor, dass der erste und/oder zweite Korrekturwert verwendet wird, um einen Erfassungszeitpunkt des ersten Absolutpositionssignals und/oder des zweiten Absolutpositionssignals zu korrigieren.

Insbesondere kann so eine Verschiebung zwischen dem ersten und/oder zweiten Absolutpositionssignal und dem Relativpositionssignal, die sich beispielsweise aus einer Einbautoleranz ergibt, korrigiert werden und somit das Relativpositionssignal mit dem ersten und/oder zweiten Absolutpositionssignal synchronisiert werden, weshalb diese Korrektur auch als Synchronisationskorrektur bezeichnet werden kann. Hierdurch wird auch ermöglicht, dass die maximal möglichen Einbautoleranzen optimal ausgenutzt werden können.

Ausführungsformen des Verfahrens können sowohl in einem separaten, insbesondere separat zu aktivierenden, Kalibrierungsmodus ausgeführt werden, als auch im normalen, laufenden Betrieb des Geräts zur Positionsmessung. So kann zum einen eine Startkalibrierung durchgeführt werden, insbesondere wenn das Gerät zur Positionsmessung zum ersten oder wiederholten Male zusammengesetzt wird, um die Komponenten aneinander auszurichten und aufeinander einzustellen. Zum anderen kann eine kontinuierliche Aufrechterhaltung der Qualität des Betriebs des Geräts zur Positionsmessung ermöglicht werden. Insbesondere können bei Verwendung des Verfahrens im laufenden Betrieb Vorhersagen über Veränderungen und mögliche Ausfälle einzelner Komponenten getroffen werden und so ein Totalausfall verhindert werden.

Teilschritte oder das gesamte Verfahren können dabei computergestützt, insbesondere computerimplementiert ausgeführt werden. Dabei kann das Verfahren beispielsweise einen Prozessor, wie einen ASIC, eine MCU, einen FPGA oder eine andere Logikeinheit verwenden bzw. davon ausgeführt werden.

Gemäß einem weiteren Aspekt wird eine Vorrichtung zur Kalibrierung eines Geräts zur Positionsmessung bereitgestellt, umfassend einen Erfassungsbereich mit einem ersten Erfassungselement, das ausgebildet ist ein Relativpositionssignal zu erfassen und einem zweiten Erfassungselement, das ausgebildet ist, ein erstes Absolutpositionssignal zu erfassen, einen Prozessor und einen Speicher, der Instruktionen speichert, die den Prozessor veranlassen ein Verfahren nach einer der zuvor beschriebenen Ausführungsformen auszuführen.

Gemäß einer Weiterbildung umfasst der Erfassungsbereich auch ein drittes Erfassungselement, das ausgebildet ist, ein zweites Absolutpositionssignal zu erfassen.

Gemäß einem weiteren Aspekt wird ein Gerät zur Positionsmessung bereitgestellt, umfassend einen Sendebereich, einen Codebereich und eine Vorrichtung gemäß einer der zuvor beschriebenen Ausführungsformen.

Die Vorrichtung kann dabei in das Gerät zur Positionsmessung integriert sein oder davon beabstandet bzw. separat davon ausgebildet sein. Insbesondere können Komponenten der Vorrichtung mit Komponenten des Geräts übereinstimmen bzw. gemeinsam genutzt werden. Dies gilt insbesondere für den Erfassungsbereich, den Speicher und/oder den Prozessor.

Ausführungsformen der Vorrichtung und des Verfahrens sind dabei in der Lage, eine Kalibrierung, insbesondere eine Selbstkalibrierung, eines Geräts zur Positionsmessung durchzuführen. Insbesondere wird durch Ausführungsformen der Vorrichtung und des Verfahrens kein Referenzencoder benötigt. Dies ist insbesondere für solche Encoder von Vorteil, die als Kit oder Bausatz bereitgestellt werden. Somit kann die Toleranz der mechanischen Relativposition der Komponenten des Sensorkerns deutlich vergrößert werden. Dennoch kann ein Referenzencoder verwendet werden und das vorliegende Verfahren dazu verwendet werden, das Ergebnis des Referenzencoders zu verifizieren.

Ausführungsformen der Vorrichtung und des Verfahrens können drehzahlunabhängig durchgeführt werden. Insbesondere Drehzahlschwankungen, die beispielsweise durch einen Antrieb verursacht werden können, insbesondere auch sind unerheblich und wirken sich nicht auf die Kalibrierungsgenauigkeit aus.

Bezüglich weitere Vorteile und Ausführungsformen der Vorrichtung und des Geräts wird auf die oben genannten Vorteile und Ausführungsformen des Verfahrens verwiesen.

Ausführungsformen einer Vorrichtung und eines Verfahrens zur Kalibrierung eines Geräts zur Positionsmessung werden nun im Detail im Zusammenhang mit den folgenden Figuren beschrieben. Es zeigen:
- Fig. 1: eine schematische Ansicht einer Ausführungsform einer Vorrichtung zur Kalibrierung eines Geräts zur Positionsmessung;
- Fig. 2: ein schematisches Ablaufdiagramm einer Ausführungsform eines Verfahrens zur Kalibrierung eines Geräts zur Positionsmessung;
- Fig. 3: ein schematisches Ablaufdiagramm einer anderen Ausführungsform eines Verfahrens zur Kalibrierung eines Geräts zur Positionsmessung;
- Fig. 4: einen beispielhaften Positionsverlauf eines Relativpositionssignals und eines ersten und zweiten Absolutpositionssignals;
- Fig. 5: einen beispielhaften Positionsverlauf eines Relativpositionssignals mit erfassten Minimal- und Maximalwerten;
- Fig. 6: einen beispielhaften Positionsverlauf eines Relativpositionssignals zu mehreren Absolutpositionsignalen; und
- Fig. 7: einen beispielhaften Aufbau eines Details einer Ausführungsform einer Vorrichtung zur Kalibrierung eines Geräts zur Positionsmessung.

Dabei bezeichnen gleiche Bezugszeichen gleiche oder ähnliche Merkmale.

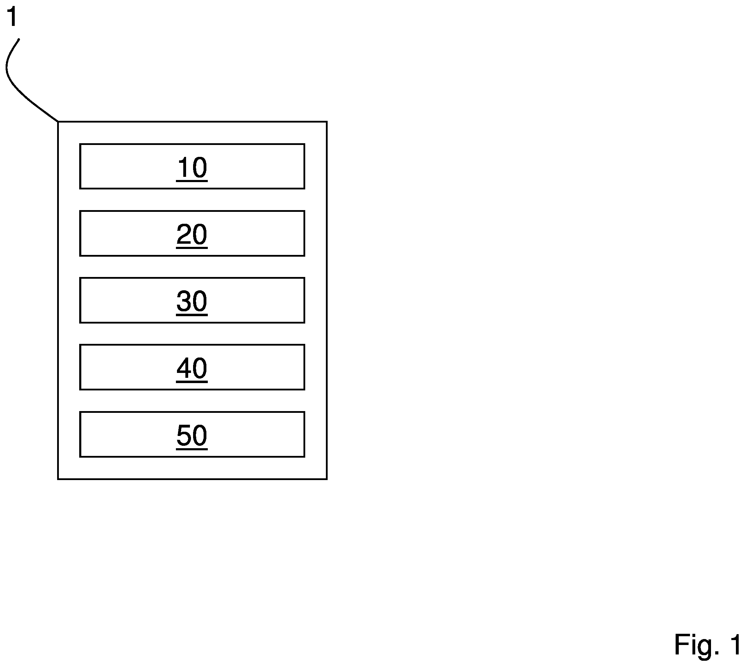

Fig. 1 zeigt eine Ausführungsform einer Vorrichtung 1 zur Kalibrierung eines Geräts zur Positionsmessung. Die Vorrichtung 1 umfasst einen Erfassungsbereich mit einem ersten Erfassungselement 10, das ausgebildet ist ein Relativpositionssignal zu erfassen, einem zweiten Erfassungselement 20, das ausgebildet ist, ein erstes Absolutpositionssignal zu erfassen und einem dritten Erfassungselement 30, das ausgebildet ist, ein zweites Absolutpositionssignal zu erfassen.

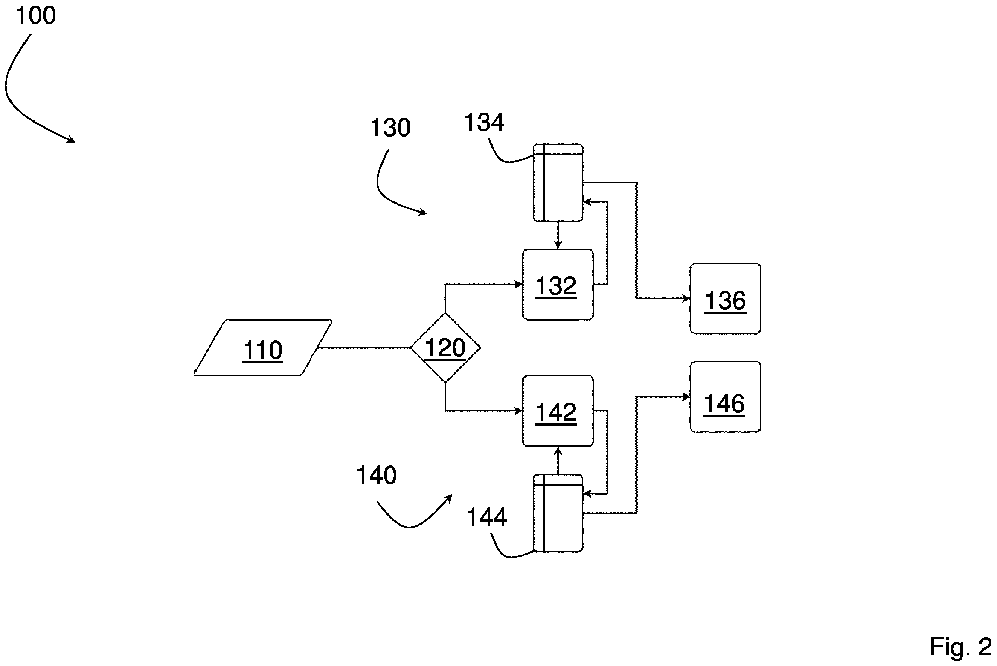

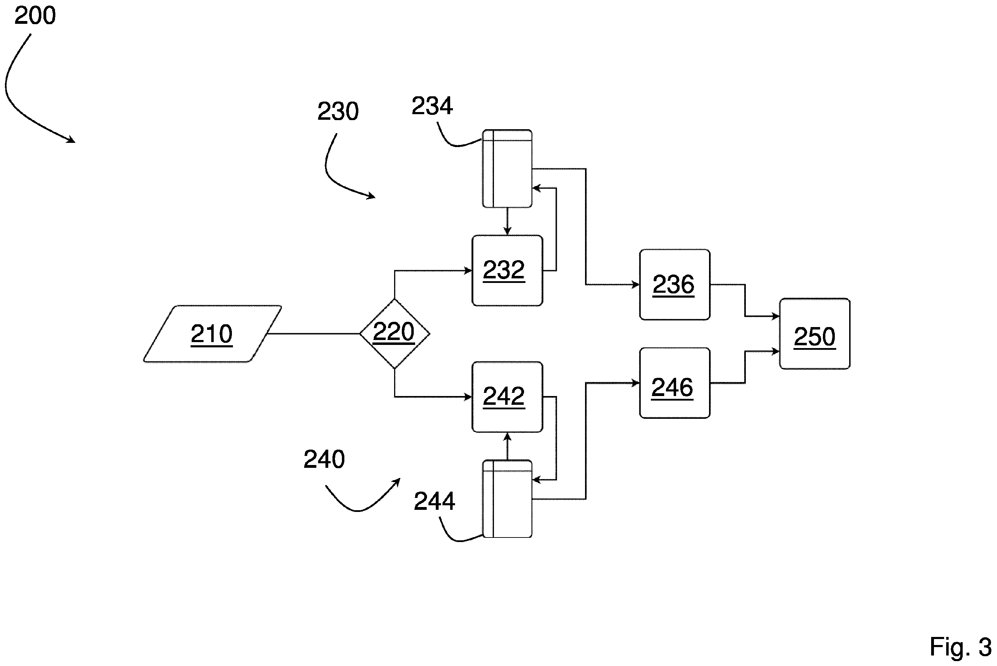

Die Vorrichtung umfasst auch einen Prozessor 40 und einen Speicher 50. Dabei sind in dem Speicher 50 Instruktionen gespeichert, die den Prozessor 40 dazu veranlassen ein Verfahren zur Kalibrierung eines Geräts zur Positionsmessung auszuführen, wie dies im Zusammenhang mit den folgenden Figuren, insbesondere Fig. 2 und Fig. 3, beschrieben wird.

Fig. 2 zeigt ein schematisches Ablaufdiagramm einer Ausführungsform eines Verfahrens 100 zur Kalibrierung eines Geräts zur Positionsmessung. Diese Ausführungsform des Verfahrens kann insbesondere als Synchronisationsverfahren bezeichnet werden und kann alternativ oder zusätzlich zu der im Zusammenhang mit Fig. 3 beschriebenen Ausführungsform durchgeführt werden. Insbesondere kann es sich um dieselben Absolut- und Relativpositionssignale handeln oder um davon verschiedene.

Das Verfahren beginnt bei Schritt 110.

Dabei wird in der Entscheidungsraute 120 entschieden, ob es sich um ein erstes Absolutpositionssignal oder ein zweites Absolutpositionssignal handelt, das betrachtet wird. Das erste Absolutpositionssignal wird in dem oberen Pfad 130 ausgewertet, während das zweite Absolutpositionssignal in dem unteren Pfad 140 ausgewertet wird. Beispielhaft wird vorliegend angenommen, dass es sich bei den oberen Pfad 130 um das Absolutpositionssignal einer sogenannten odd- oder ungeradzahligen Diode handelt und bei dem unteren Pfad 140 um das Absolutpositionssignal einer sogenannten even- oder geradzahligen Diode handelt. Typischerweise sind sowohl mehrere odd- und mehrere even-Dioden vorgesehen, die sich einander abwechseln und jeweils selbstständige Absolutpositionssignale liefern, wobei hier aus Gründen der Übersichtlichkeit lediglich ein Signal von einer odd-Diode und ein Signal von einer even-Diode abgebildet und beschrieben ist. Es werden also gemäß dieser Ausführungsform des Verfahrens zwei unterschiedliche Gruppen von Dioden getrennt voneinander betrachtet und ausgewertet.

Es wird dann entlang des oberen Pfades 130 eine Änderung des Absolutpositionssignals der odd-Diode erfasst und daraufhin ein Wert des Relativpositionssignals erfasst. Eine Änderung umfasst vorliegend sowohl eine Erhöhung des Signals als auch eine Verringerung des Signals, insbesondere eine Schaltflanke sowohl von 0 auf 1 als auch von 1 auf 0.

Es wird dann im Schritt 132 geprüft, ob der Wert des Relativpositionssignals kleiner als ein vorbestimmter Minimalwert oder größer als ein vorbestimmter Maximalwert für die odd-Diode ist, der aus einem Speicher 134 ausgelesen wird.

Wenn dieser Wert des Relativpositionssignals kleiner als der vorbestimmte Minimalwert ist, wird der Wert des Relativpositionssignals als neuer vorbestimmter Minimalwert im Speicher 134 gespeichert. Ebenso wird, wenn dieser Wert des Relativpositionssignals größer ist als der vorbestimmte Maximalwert ist, der Wert des Relativpositionssignals als neuer vorbestimmter Maximalwert im Speicher 134 gespeichert.

Sollte der Wert des Relativpositionssignals weder kleiner als der vorbestimmte Minimalwert noch größer als der vorbestimmte Maximalwert sein, werden der vorbestimmte Minimalwert und der vorbestimmte Maximalwert nicht geändert.

In jedem Fall werden in einem weiteren Schritt 136 eine Differenz aus dem in dem Speicher hinterlegten vorbestimmten Maximalwert und dem in dem Speicher 134 hinterlegten vorbestimmten Minimalwert gebildet und durch zwei dividiert. So ergibt sich ein Korrekturwert für die odd-Diode.

Dieser Korrekturwert kann auch als Synchronisationskorrekturwert, insbesondere erster Synchronisationskorrekturwert bezeichnet werden.

Basierend auf dem ersten Synchronisationskorrekturwert wird dann die Positionserfassung korrigiert. Insbesondere wird basierend auf dem ersten Synchronisationskorrekturwert eine Position, die basierend auf dem Relativpositionssginal erfasst wurde, um den ersten Synchronisationskorrekturwert korrigiert. Der erste Synchronisationskorrekturwert dient dabei insbesondere dazu, einen Versatz, insbesondere einen Positionsversatz, zwischen Relativpositionssignal und einem oder mehreren Absolutpositionssignalen zu korrigieren. Dadurch, dass eine Mittelwertbildung zwischen dem jemals erfassten Maximalwert und dem jemals erfassten Minimalwert erfolgt, wird so eine besonders ausgewogene und für alle Dioden gleichermaßen korrekter Korrekturwert ermöglicht.

Analog zum oberen Pfad 130 wird entlang des unteren Pfades 140 eine Änderung des Absolutpositionssignals der even-Diode erfasst und daraufhin ein Wert eines Relativpositionssignals erfasst. Eine Änderung umfasst vorliegend auch sowohl eine Erhöhung des Signals als auch eine Verringerung des Signals, insbesondere eine Schaltflanke sowohl von 0 auf 1 als auch von 1 auf 0.

Es wird dann im Schritt 142 geprüft, ob der Wert des Relativpositionssignals kleiner als ein vorbestimmter Minimalwert oder größer als ein vorbestimmter Maximalwert für die even-Diode ist, der aus einem Speicher 144 ausgelesen wird.

Wenn dieser Wert des Relativpositionssignals kleiner als der vorbestimmte Minimalwert ist, wird der Wert des Relativpositionssignals als neuer vorbestimmter Minimalwert im Speicher 144 gespeichert. Ebenso wird, wenn dieser Wert des Relativpositionssignals größer ist als der vorbestimmte Maximalwert ist, der Wert des Relativpositionssignals als neuer vorbestimmter Maximalwert im Speicher 144 gespeichert.

Sollte der Wert des Relativpositionssignals weder kleiner als der vorbestimmte Minimalwert noch größer als der vorbestimmte Maximalwert sein, werden der vorbestimmte Minimalwert und der vorbestimmte Maximalwert nicht geändert.

In jedem Fall werden in einem weiteren Schritt 146 ein Korrekturwert aus dem in dem Speicher 144 hinterlegten vorbestimmten Maximalwert und dem in dem Speicher 144 hinterlegten vorbestimmten Minimalwert gebildet.

Dieser Korrekturwert kann auch als Synchronisationskorrekturwert, insbesondere zweiter Synchronisationskorrekturwert bezeichnet werden.

Basierend auf dem zweiten Synchronisationskorrekturwert wird dann die Positionserfassung korrigiert. Der zweite Synchronisationskorrekturwert dient insbesondere der Überprüfung des ersten Synchronisationskorrekturwerts bzw. als Redundanz und hat im Wesentlichen dieselbe Funktion wie der erste Synchronisationswert.

Sollte kein vorbestimmter Minimalwert und/oder kein vorbestimmter Maximalwert hinterlegt sein, beispielsweise weil das Verfahren zum ersten Mal durchlaufen wird, weil es zurückgesetzt oder weil der Speicher 134, 144 gelöscht wurde, wird der erfasste erste Wert des Relativpositionssignals als der vorbestimmte Minimalwert und der vorbestimmte Maximalwert in dem Speicher 134, 144 erstmals hinterlegt. In diesem Fall wird auf eine Mittelwertbildung verzichtet und der Wert des Relativpositionssignals als Korrekturwert angenommen. Alternativ kann in diesem Fall auch keine Korrektur erfolgen, insbesondere weil noch nicht genügend Werte erfasst wurden. Beispielsweise kann eine Korrektur basierend auf einem Korrekturwert erst dann erfolgen, wenn zumindest zwei, drei, vier oder mehr Werte erfasst wurden.

Sobald ein zweiter Wert des Relativpositionssignals erfasst wird, und dieser beispielsweise größer ist als der erste Wert des Relativpositionssignals, wird der erste Wert des Relativpositionssignals als vorbestimmter Minimalwert definiert und im Speicher hinterlegt sowie der zweite Wert des Relativpositionssignals als vorbestimmter Maximalwert definiert und im Speicher hinterlegt, oder andersherum.

Diese Ausführungen gelten sowohl für die odd- als auch für die even-Diode, also sowohl für den oberen Pfad 130 als auch für den unteren Pfad 140.

Fig. 3 zeigt ein schematisches Ablaufdiagramm einer weiteren Ausführungsform eines Verfahrens 200 zur Kalibrierung eines Geräts zur Positionsmessung. Diese Ausführungsform des Verfahrens kann insbesondere als Thresholdkorrekturverfahren bezeichnet werden und kann alternativ oder zusätzlich zu der im Zusammenhang mit Fig. 2 beschriebenen Ausführungsform durchgeführt werden. Insbesondere kann es sich um dieselben Absolut- und Relativpositionssignale handeln oder um davon verschiedene.

Das Verfahren beginnt bei Schritt 210.

Dabei wird in der Entscheidungsraute 220 entschieden, ob es sich um eine steigende Flanke eines Absolutpositionssignals oder eine fallende Flanke eines Absolutpositionssignals handelt, das betrachtet wird. Beispielhaft wird vorliegend angenommen, dass es sich bei den oberen Pfad 230 um eine steigende Flanke des Absolutpositionssignals handelt und bei dem unteren Pfad 240 um eine fallende Flanke des Absolutpositionssignals handelt. Dabei ist es im Gegensatz zu dem Ausführungsbeispiel aus Fig. 2 unerheblich ob es sich um eine steigende oder fallende Flanke einer odd- oder einer even-Diode handelt, sondern lediglich welche Flanke, d.h. steigend oder fallend, betroffen ist bzw. gerade die Erfassung auslöst. Es werden also gemäß dieser Ausführungsform des Verfahrens zwei unterschiedliche Signalformen von Dioden, insbesondere den gleichen Dioden, betrachtet und ausgewertet.

Es wird dann entlang des oberen Pfades 230 eine steigende Flanke als Änderung des Absolutpositionssignals erfasst und daraufhin ein Wert eines Relativpositionssignals erfasst.

Es wird dann im Schritt 232 geprüft, ob der Wert des Relativpositionssignals kleiner als ein vorbestimmter Minimalwert oder größer als ein vorbestimmter Maximalwert für eine steigende Flanke ist, der aus einem Speicher 234 ausgelesen wird.

Wenn dieser Wert des Relativpositionssignals kleiner als der vorbestimmte Minimalwert ist, wird der Wert des Relativpositionssignals als neuer vorbestimmter Minimalwert im Speicher 234 gespeichert. Ebenso wird, wenn dieser Wert des Relativpositionssignals größer ist als der vorbestimmte Maximalwert ist, der Wert des Relativpositionssignals als neuer vorbestimmter Maximalwert im Speicher 234 gespeichert.

Sollte der Wert des Relativpositionssignals weder kleiner als der vorbestimmte Minimalwert noch größer als der vorbestimmte Maximalwert sein, werden der vorbestimmte Minimalwert und der vorbestimmte Maximalwert nicht geändert.

In jedem Fall werden in einem weiteren Schritt 236 eine Differenz aus dem in dem Speicher 234 hinterlegten vorbestimmten Maximalwert und dem in dem Speicher 234 hinterlegten vorbestimmten Minimalwert gebildet und durch zwei dividiert. So ergibt sich ein Korrekturwert für die steigende Flanke.

Dieser Korrekturwert kann auch als Thresholdkorrekturwert, insbesondere erster Thresholdkorrekturwert bezeichnet werden.

Analog zum oberen Pfad 230 wird entlang des unteren Pfades 240 eine fallende Flanke als Änderung des Absolutpositionssignals erfasst und daraufhin ein Wert des Relativpositionssignals erfasst.

Es wird dann im Schritt 242 geprüft, ob der Wert des Relativpositionssignals kleiner als ein vorbestimmter Minimalwert oder größer als ein vorbestimmter Maximalwert für eine fallende Flanke ist, der aus einem Speicher 244 ausgelesen wird.

Wenn dieser Wert des Relativpositionssignals kleiner als der vorbestimmte Minimalwert ist, wird der Wert des Relativpositionssignals als neuer vorbestimmter Minimalwert im Speicher 244 gespeichert. Ebenso wird, wenn dieser Wert des Relativpositionssignals größer ist als der vorbestimmte Maximalwert ist, der Wert des Relativpositionssignals als neuer vorbestimmter Maximalwert im Speicher 244 gespeichert.

Sollte der Wert des Relativpositionssignals weder kleiner als der vorbestimmte Minimalwert noch größer als der vorbestimmte Maximalwert sein, werden der vorbestimmte Minimalwert und der vorbestimmte Maximalwert nicht geändert.

In jedem Fall werden in einem weiteren Schritt 246 eine Differenz aus dem in dem Speicher 244 hinterlegten vorbestimmten Maximalwert und dem in dem Speicher 244 hinterlegten vorbestimmten Minimalwert gebildet und durch zwei dividiert. So ergibt sich ein Korrekturwert für die fallende Flanke.

Dieser Korrekturwert kann auch als Thresholdkorrekturwert, insbesondere zweiter Thresholdkorrekturwert bezeichnet werden.

Der erste Thresholdkorrekturwert und der zweite Thresholdkorrekturwert werden dann verwendet, um eine Schaltschwelle zur tatsächlichen Ermittlung der Absolutpositionssignale einzustellen. Die korrekte Schaltschwelle basiert sowohl auf dem idealen Tastverhältnis von typischerweise 50% oder 0,5, der tatsächlichen Schaltschwelle bei der jeweiligen Erfassung und dem gemessenen Tastverhältnis. Das gemessene Tastverhältnis basiert dabei auf dem ersten und zweiten Thresholdkorrekturwert, also dem gemittelten Maximal- und Minimalwert der steigenden und fallenden Flanke, und wird durch die Periodenlänge plus 0,5 dividiert. Es ergibt sich somit die folgenden Formel zur Berechnung der korrekten Schaltschwelle: 0,5 * Schaltschwelle bei der Erfassung / ((steigende Flanke - fallende Flanke) / Periodenlänge + 0,5).

Sollte kein vorbestimmter Minimalwert und/oder kein vorbestimmter Maximalwert hinterlegt sein, beispielsweise weil das Verfahren 200 zum ersten Mal durchlaufen wird, weil es zurückgesetzt oder weil der Speicher 234, 244 gelöscht wurde, wird der erfasste erste Wert des Relativpositionssignals als der vorbestimmte Minimalwert und der vorbestimmte Maximalwert in dem Speicher 234, 244 erstmals hinterlegt. In diesem Fall wird auf eine Mittelwertbildung verzichtet und der Wert des Relativpositionssignals als Korrekturwert angenommen. Alternativ kann in diesem Fall auch keine Korrektur erfolgen, insbesondere weil noch nicht genügend Werte erfasst wurden. Beispielsweise kann eine Korrektur basierend auf einem Korrekturwert erst dann erfolgen, wenn zumindest zwei, drei, vier oder mehr Werte erfasst wurden.

Sobald ein zweiter Wert des Relativpositionssignals erfasst wird, und dieser beispielsweise größer ist als der erste Wert des Relativpositionssignals, wird der erste Wert des Relativpositionssignals als vorbestimmter Minimalwert definiert und im Speicher hinterlegt sowie der zweite Wert des Relativpositionssignals als vorbestimmter Maximalwert definiert und im Speicher hinterlegt, oder andersherum.

Diese Ausführungen gelten sowohl für die steigende als auch für die fallende Flanke, also sowohl für den oberen Pfad 230 als auch für den unteren Pfad 240.

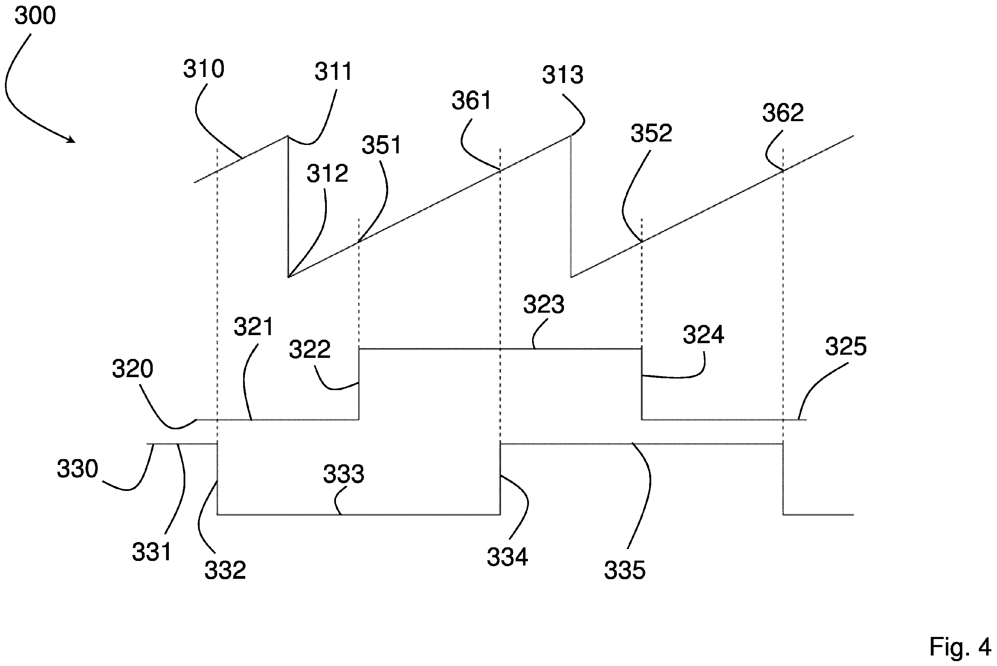

Fig. 4 zeigt einen beispielhaften Positionsverlauf 300 eines Relativpositionssignals 310 und eines ersten und zweiten Absolutpositionssignals 320, 330.

Dabei ist entlang der Rechtsachse die Position, die unter Berücksichtigung der Drehzahl bzw. der Relativgeschwindigkeit der Komponenten zueinander auch der Zeit entspricht, und entlang der Hochachse jeweils der Wert des Relativpositionssignals 310 und des ersten und zweiten Absolutpositionssignals 320 und 330 übereinander aufgetragen.

Das Relativpositionssignal 310 ist beispielhaft als sägezahnfömig dargestellt und verläuft periodisch von einem Minimalwert 311, von dem es linear auf einen Maximalwert 312 ansteigt und dann unmittelbar wieder auf den Minimalwert 313 fällt. Dabei kann der Minimalwert 311, 313 beispielhaft mit 0 und der Maximalwert 312 beispielhaft mit 1 angegeben sein. Alternativ kann der Minimalwert 311, 313 -2,5 betragen und der Maximalwert 312 +2,5. Typischerweise ist der Minimalwert 0 und der Maximalwert entspricht einem Integer, der sich aus der Auflösung der digitalen Verarbeitung des Relativpositionssignals ergibt, beispielsweise für 12 bit 2¹²-1 und für 16 bit 2¹⁶-1.

Das erste Absolutpositionssignal 320 ist beispielhaft als das Signal einer even- Diode dargestellt, wie im Zusammenhang mit Fig. 2 erläutert. Das Signal der even-Diode weist dabei einen rechteckförmigen Verlauf auf, wobei die Länge des Rechtecks variieren kann, insbesondere um ein vorbestimmtes Codemuster, wie beispielsweise einen Gray-Code oder einen Pseudozufallscode abzubilden und so eine Absolutposition bestimmbar zu machen.

Dazu weist das erste Absolutpositionssignal 320 zunächst einen Abschnitt 321 auf, in dem das Signal abschnittsweise 0 ist, um dann über eine steigende Flanke 322 in einen Abschnitt 323 überzugehen, in dem das erste Absolutpositionssignal 320 abschnittsweise 1 ist. An diesen Abschnitt 323 schließt sich sodann eine fallende Flanke 324 an, auf den ein Abschnitt 325 folgt, in dem das erste Absolutpositionssignal 320 abschnittsweise 0 beträgt. Diese Abschnitte können sich dann, wie zuvor beschrieben, in einem bestimmten Muster wiederholen.

Das zweite Absolutpositionssignal 330 ist beispielhaft als das Signal einer odd-Diode dargestellt, wie ebenso im Zusammenhang mit Fig. 2 erläutert. Auch das Signal der odd-Diode weist dabei einen rechteckförmigen Verlauf auf, wobei die Länge des Rechtecks ebenso variieren kann, insbesondere um ein vorbestimmtes, weiter insbesondere dasselbe Codemuster wie das erste Absolutpositionssignal 320, abzubilden und so eine Absolutposition bestimmbar zu machen.

Dazu weist das zweite Absolutpositionssignal 330 zunächst einen Abschnitt 331 auf, in dem das Signal abschnittsweise 1 ist, um dann über eine fallende Flanke 332 in einen Abschnitt 333 überzugehen, in dem das zweite Absolutpositionssignal 330 abschnittsweise 0 ist. An diesen Abschnitt 333 schließt sich sodann eine steigende Flanke 334 an, auf den ein Abschnitt 335 folgt, in dem das erste zweite Absolutpositionssignal 330 abschnittsweise 1 beträgt. Diese Abschnitte können sich dann ebenso wie zuvor beschrieben in einem bestimmten Muster wiederholen.

Dabei ist das erste Absolutpositionssignal 320, das von einer even-Diode stammt, um 180° phasenverschoben zum zweiten Absolutpositionssignal 330, das von einer odd-Diode stammt.

Die fallenden und steigenden Flanken des ersten und zweiten Absolutpositionssignals 320, 330 stellen eine Änderung über einem vorbestimmten Schwellenwert, der beispielhaft bei 0,5 liegen kann, dar und triggern dadurch die Erfassung von Werten des Relativpositionssginals.

Dabei wird beispielhaft die steigende Flanke 322 des ersten Absolutpositionssignals 320 der even-Diode wird erfasst und löst die Erfassung eines ersten Werts 351 des Relativpositionssignals 310 aus. Ebenso wird die fallende Flanke 324 des ersten Absolutpositionssignals 320 erfasst und löst die Erfassung des zweiten Werts 352 des Relativpositionssignals 310 aus.

Ebenso wird die fallende Flanke 332 des zweiten Absolutpositionssignals 330 der odd-Diode erfasst und löst die Erfassung eines dritten Werts 361 des Relativpositionssignals 310 aus sowie die Erfassung der steigende Flanke 334 des zweiten Absolutpositionssignals 330 die Erfassung des vierten Werts 362 des Relativpositionssignals 310 auslöst.

Diese steigenden und fallenden Flanken des ersten Absolutpositionssignals 320 und des zweiten Absolutpositionssignals 330 werden dann über mehrere Perioden des Relativpositionssignals 310 erfasst und führen zu einer Menge an Korrekturwerten, von denen, wie dies im Zusammenhang mit Fig. 2 beschrieben wurde, ein Mittelwert aus der geringsten und der höchsten Abweichung gebildet werden kann, sowohl für das erste Absolutpositionssginal 320 für die even-Diode als auch für das zweite Absolutpositionssignal 330 für die odd-Diode.

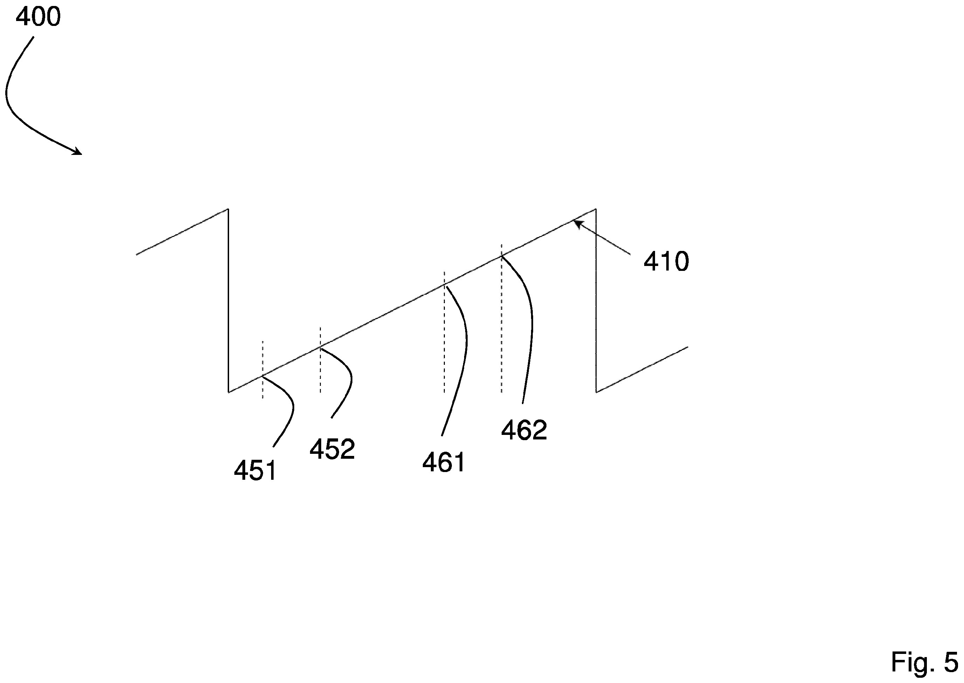

Dies wird auch noch einmal im Zusammenhang mit der folgenden Fig. 5 erläutert.

Fig. 5 zeigt eine durch das im Zusammenhang mit Fig. 2 beschriebene Verfahren erfolgte Ermittlung bzw. Auswertung des Korrekturwerts, insbesondere des dort beschriebenen ersten und zweiten Synchronisationskorrekturwerts.

Dabei zeigen die gestrichelten Linien in Übereinstimmung mit Fig. 4 Auslösezeitpunkte einer steigenden bzw. fallenden Flanke einer odd-Diode und einer even-Diode an. Insbesondere sind in dieser Fig. 5 ein Minimalwert 451 und ein Maximalwert 452 einer odd-Diode und ein Minimalwert 461 und ein Maximalwert 462 einer even-Diode, wie sie durch mehrere Durchläufe des in Fig. 2 gezeigten Verfahrens ermittelt und im Speicher hinterlegt sein können.

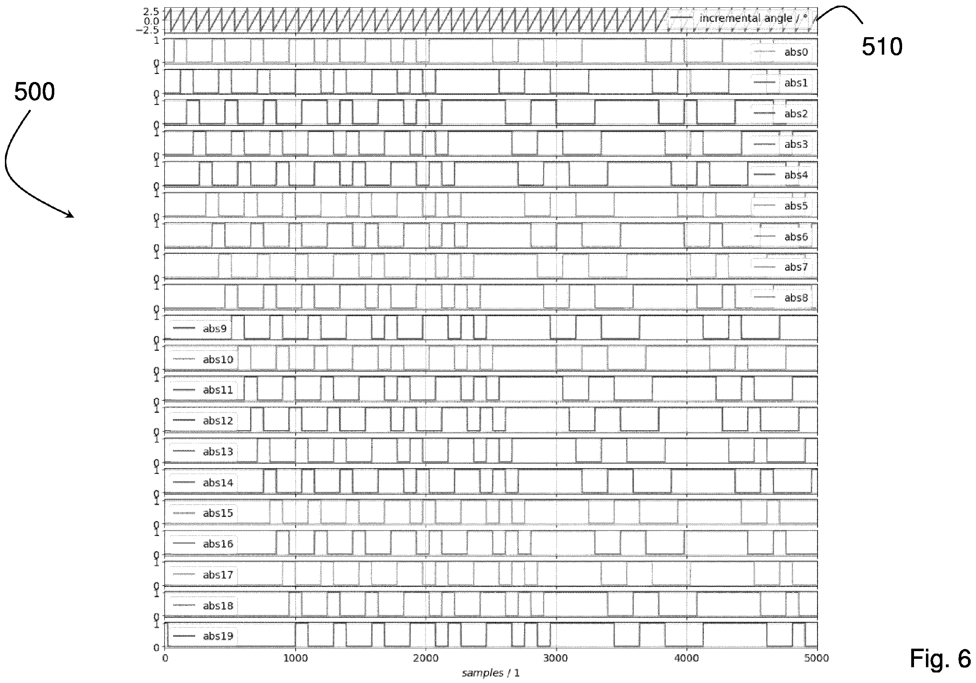

Fig. 6 zeigt einen Positionsverlauf 500 eines Relativpositionssignals 510 und mehrerer Absolutpositionssignale, die aufsteigend von abs0 bis abs19 nummeriert sind.

Dabei ist auf der Rechtsachse die Anzahl an Abtastungen und damit der Positionsverlauf der jeweiligen Signale aufgetragen und auf der jeweiligen Hochachse der Signalwert, wobei das Relativpositionssignal 510 wieder als sägezahnförmiges Signal abgebildet ist, das sich in einem Wertebereich von -pi bis +pi (oder 0 bis 2*pi) bewegt und die Absolutpositionssignale ein Codemuster mit steigenden und fallenden Flanken von 0 auf 1 darstellen.

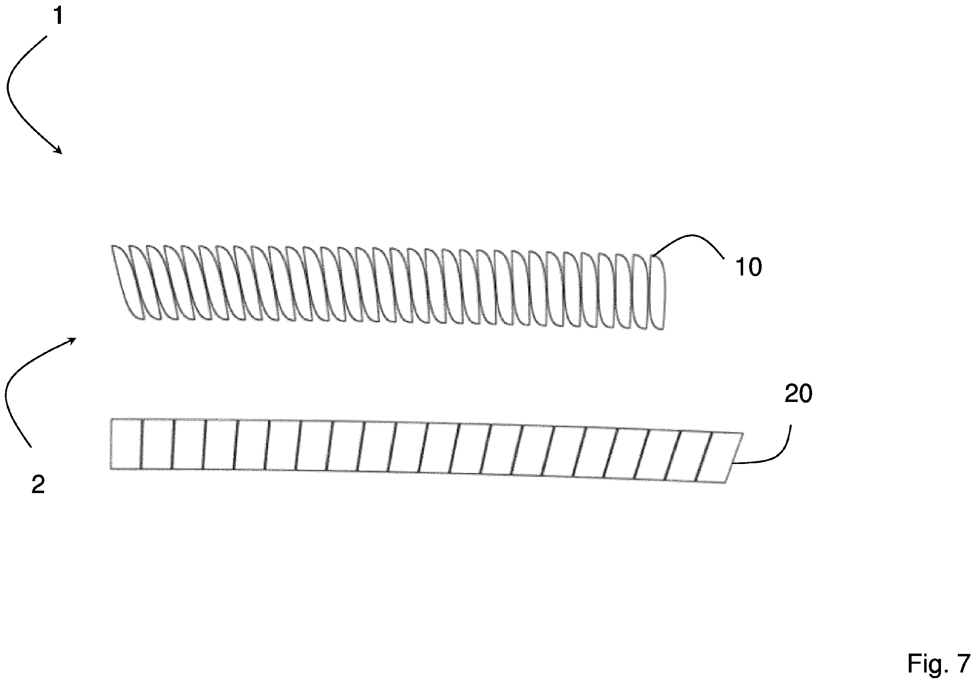

Fig. 7 zeigt einen beispielhaften Aufbau eines Details einer Ausführungsform einer Vorrichtung 1 zur Kalibrierung eines Geräts zur Positionsmessung, wie in Fig. 1 gezeigt.

Die Vorrichtung 1 umfasst dabei einen Erfassungsbereich 2 mit einem ersten Erfassungselement 10, das ausgebildet ist ein Relativpositionssignal zu erfassen und einem zweiten Erfassungselement, das ausgebildet ist, ein erstes Absolutpositionssignal zu erfassen.

Wie in Fig. 7 beispielhaft gezeigt weist die Vorrichtung 1 mehrere erste Erfassungselemente 10 auf und mehrere zweite Erfassungselemente 20 auf, von denen aus Gründen der Übersichtlichkeit jeweils nur eines mit einem Bezugszeichen versehen sind.

Die ersten Erfassungselemente 10, die ausgebildet sind ein Relativpositionssignal zu erfassen, sind dabei abschnittsweise sinusförmig ausgebildet, wohin gegen die zweiten Erfassungselemente 20, die ausgebildet sind, ein Absolutpositionssignal zu erfassen, rechteckig bzw. parallelogrammförmig ausgebildet sind. Die jeweiligen Formen der Erfassungselemente sind dabei auf die individuelle Art der Positionserfassung zugeschnitten.

### Bezugszeichenliste

- 1: Vorrichtung
- 2: Erfassungsbereich
- 10: erstes Erfassungselement
- 20: zweites Erfassungselement
- 30: drittes Erfassungselement
- 40: Prozessor
- 50: Speicher
- 100: Verfahren
- 110: Verfahrensschritt
- 120: Entscheidung
- 130: Pfad
- 132: Verfahrensschritt
- 134: Speicher
- 136: Verfahrensschritt
- 140: Pfad
- 142: Verfahrensschritt
- 144: Speicher
- 146: Verfahrensschritt
- 200: Verfahren
- 210: Verfahrensschritt
- 220: Entscheidung
- 230: Pfad
- 232: Verfahrensschritt
- 234: Speicher
- 236: Verfahrensschritt
- 240: Pfad
- 242: Verfahrensschritt
- 244: Speicher
- 246: Verfahrensschritt
- 250: Verfahrensschritt
- 300: Signalverlauf
- 310: Relativpositionssignal
- 311: Maximalwert
- 312: Minimalwert
- 313: Maximalwert
- 320: erstes Absolutpositionssignal
- 321: Signalabschnitt
- 322: steigende Flanke
- 323: Signalabschnitt
- 324: fallende Flanke
- 325: Signalabschnitt
- 330: zweites Absolutpositionssignal
- 331: Signalabschnitt
- 332: fallende Flanke
- 333: Signalabschnitt
- 334: steigende Flanke
- 335: Signalabschnitt
- 351: erster Wert des Relativpositionssignals
- 352: zweiter Wert des Relativpositionssignals
- 361: dritter Wert des Relativpositionssignals
- 362: vierter Wert des Relativpositionssignals
- 400: Signalverlauf
- 410: Relativpositionssignal
- 451: Minimalwert
- 452: Maximalwert
- 461: Minimalwert
- 462: Maximalwert
- 500: Signalverlauf

## Patentansprüche

1. Verfahren (100, 200) zur Kalibrierung eines Geräts zur Positionsmessung, umfassend:
- Erfassen eines ersten Absolutpositionssignals (320);
- Erfassen eines ersten Werts (351) eines Relativpositionssignals (310) bei einer ersten Änderung des ersten Absolutpositionssignals (320);
- Berechnen eines ersten Korrekturwerts basierend auf dem ersten Wert (351) des Relativpositionssignals (310); und
- Verwenden des ersten Korrekturwerts zur Korrektur einer Positionsmessung des Geräts.

2. Verfahren (100, 200) nach Anspruch 1, weiter umfassend:
- Erfassen eines zweiten Werts (352) des Relativpositionssignals (310) bei einer zweiten Änderung des ersten Absolutpositionssignals (320);
wobei das Berechnen des ersten Korrekturwerts basierend auf dem ersten und dem zweiten Wert (351, 352) des Relativpositionssignals erfolgt.

3. Verfahren (100, 200) nach Anspruch 2, wobei das Berechnen des ersten Korrekturwerts eine Mittelwertbildung des ersten und des zweiten Werts (351, 352) des Relativpositionssignals (310) umfasst.

4. Verfahren (100, 200) nach einem der vorhergehenden Ansprüche, weiter umfassend:
- Erfassen eines zweiten Absolutpositionssignals (330);
- Erfassen eines dritten Werts (361) des Relativpositionssignals (310) bei einer ersten Änderung des zweiten Absolutpositionssignals (330);
- Berechnen eines zweiten Korrekturwerts basierend auf dem dritten Wert (361) des Relativpositionssignals (310); und
- Verwenden des zweiten Korrekturwerts zur Korrektur einer Positionsmessung des Geräts.

5. Verfahren (100, 200) nach Anspruch 4, weiter umfassend:
- Erfassen eines vierten Werts (362) des Relativpositionssignals (310) bei einer zweiten Änderung des zweiten Absolutpositionssignals (330);
wobei das Berechnen des zweiten Korrekturwerts basierend auf dem dritten und dem vierten Wert (361, 362) des Relativpositionssignals (310) erfolgt.

6. Verfahren (100, 200) nach Anspruch 5, wobei das Berechnen des zweiten Korrekturwerts eine Mittelwertbildung des dritten und des vierten Werts (361, 362) des Relativpositionssignals (310) umfasst.

7. Verfahren (100, 200), nach einem der vorhergehenden Ansprüche, weiter umfassend:
- Vergleichen des ersten Werts (351) des Relativpositionssignals (310) mit einem vorbestimmten minimalen Wert des Relativpositionssignals (310); und
- wenn der erste Wert (351) des Relativpositionssignals (310) kleiner ist als der vorbestimmte minimale Wert des Relativpositionssignals (310): Speichern des ersten Werts (351) des Relativpositionssignals (310) als der vorbestimmte minimale Wert des Relativpositionssignals (310); und
wobei das Berechnen des ersten Korrekturwerts basierend auf dem vorbestimmten minimalen Wert des Relativpositionssignals (310) erfolgt.

8. Verfahren (100, 200), nach einem der vorhergehenden Ansprüche, weiter umfassend:
- Vergleichen des ersten Werts (351) des Relativpositionssignals (310) mit einem vorbestimmten maximalen Wert des Relativpositionssignals (310); und
- wenn der erste Wert (351) des Relativpositionssignals (310) größer ist als der vorbestimmte maximale Wert des Relativpositionssignals (310): Speichern des ersten Werts (351) des Relativpositionssignals (310) als der vorbestimmte maximale Wert des Relativpositionssignals (310); und
wobei das Berechnen des ersten Korrekturwerts basierend auf dem vorbestimmten maximalen Wert des Relativpositionssignals (310) erfolgt.

9. Verfahren (100, 200) nach Anspruch 8, wobei das Berechnen des ersten Korrekturwerts eine Mittelwertbildung des vorbestimmte minimalen Werts und des vorbestimmten maximalen Werts des Relativpositionssignals (310) umfasst.

10. Verfahren (100, 200) nach einem der vorhergehenden Ansprüche, wobei es sich bei der ersten Änderung des ersten Absolutpositionssignals (320), der zweiten Änderung des ersten Absolutpositionssignals (320), der ersten Änderung des zweiten Absolutpositionssignals (330) und/oder der zweiten Änderung des zweiten Absolutpositionssignals (330) um eine Flanke, insbesondere eine steigende Flanke (322) und/oder eine fallende Flanke (324, 334) handelt.

11. Verfahren (100, 200) nach einem der vorhergehenden Ansprüche, wobei der erste und/oder zweite Korrekturwert verwendet wird, um einen Erfassungszeitpunkt des ersten Absolutpositionssignals (320) und/oder des zweiten Absolutpositionssignals (330) zu korrigieren.

12. Verfahren (100, 200) nach einem der vorhergehenden Ansprüche, wobei der erste und/oder zweite Korrekturwert verwendet wird, um einen Erfassungsschwellenwert des ersten Absolutpositionssignals (320) und/oder des zweiten Absolutpositionssignals (330) zu korrigieren.

13. Vorrichtung (1) zur Kalibrierung eines Geräts zur Positionsmessung, umfassend:
- einen Erfassungsbereich (2), umfassend ein erstes Erfassungselement (10), das ausgebildet ist ein Relativpositionssignal (310) zu erfassen und ein zweites Erfassungselement (20), das ausgebildet ist, ein erstes Absolutpositionssignal (320) zu erfassen;
- einen Prozessor (30); und
- einen Speicher (40), der Instruktionen speichert, die den Prozessor (30) veranlassen ein Verfahren (100, 200) nach einem der Ansprüche 1 bis 12 auszuführen.

14. Gerät zur Positionsmessung, umfassend:
- einen Sendebereich;
- einen Codebereich; und
- eine Vorrichtung (1) gemäß Anspruch 13, wobei der Sendebereich, der Codebereich und das Erfassungsbereich derart ausgebildet sind, um relativ zueinander verschoben zu werden, um ein Relativpositionssignal und erstes Absolutpositionssignal zu erzeugen.

## Claims

1. A method (100, 200) of calibrating a device for position measurement, comprising:
- detecting a first absolute position signal (320);
- detecting a first value (351) of a relative position signal (310) on a first change of the first absolute position signal (320);
- calculating a first correction value based on the first value (351) of the relative position signal (310); and
- using the first correction value to correct a position measurement of the device.

2. A method (100, 200) according to claim 1, further comprising:
- detecting a second value (352) of the relative position signal (310) on a second change of the first absolute position signal (320),
wherein the calculation of the first correction value takes place based on the first and the second value (351, 352) of the relative position signal.

3. A method (100, 200) according to claim 2, wherein the calculation of the first correction value comprises averaging the first and the second value (351, 352) of the relative position signal (310).

4. A method (100, 200) according to any one of the preceding claims, further comprising:
- detecting a second absolute position signal (330);
- detecting a third value (361) of the relative position signal (310) on a first change of the second absolute position signal (330);
- calculating a second correction value based on the third value (361) of the relative position signal (310); and
- using the second correction value to correct a position measurement of the device.

5. A method (100, 200) according to claim 4, further comprising:
- detecting a fourth value (362) of the relative position signal (310) on a second change of the second absolute position signal (330);
wherein the calculation of the second correction value takes place based on the third and the fourth value (361, 362) of the relative position signal (310).

6. A method (100, 200) according to claim 5, wherein the calculation of the second correction value comprises averaging the third and the fourth value (361, 362) of the relative position signal (310).

7. A method (100, 200) according to any one of the preceding claims, further comprising:
- comparing the first value (351) of the relative position signal (310) with a predetermined minimum value of the relative position signal (310); and
- if the first value (351) of the relative position signal (310) is smaller than the predetermined minimum value of the relative position signal (310): storing the first value (351) of the relative position signal (310) as the predetermined minimum value of the relative position signal (310); and
wherein the calculation of the first correction value takes place based on the predetermined minimum value of the relative position signal (310).

8. A method (100, 200) according to any one of the preceding claims, further comprising:
- comparing the first value (351) of the relative position signal (310) with a predetermined maximum value of the relative position signal (310); and
- if the first value (351) of the relative position signal (310) is greater than the predetermined maximum value of the relative position signal (310): storing the first value (351) of the relative position signal (310) as the predetermined maximum value of the relative position signal (310); and
wherein the calculation of the first correction value takes place based on the predetermined maximum value of the relative position signal (310).

9. A method (100, 200) according to claim 8, wherein the calculation of the first correction value comprises averaging the predetermined minimum value and the predetermined maximum value of the relative position signal (310).

10. A method (100, 200) according to any one of the preceding claims, wherein the first change of the first absolute position signal (320), the second change of the first absolute position signal (320), the first change of the second absolute position signal (330) and/or the second change of the second absolute position signal (330) is an edge, in particular a rising edge (322) and/or a falling edge (324, 334).

11. A method (100, 200) according to any one of the preceding claims, wherein the first and/or second correction value is/are used to correct a detection point in time of the first absolute position signal (320) and/or the second absolute position signal (330).

12. A method (100, 200) according to any one of the preceding claims, wherein the first and/or second correction value is/are used to correct a detection threshold value of the first absolute position signal (320) and/or the second absolute position signal (330).

13. An apparatus (1) for calibrating a device for position measurement, comprising:
- a detection region (2), comprising a first detection element (10), which is configured to detect a relative position signal (310), and a second detection element (20) which is configured to detect a first absolute position signal (320);
- a processor (30); and
- a memory (40) which stores instructions that cause the processor (30) to execute a method (100, 200) according to any one of the claims 1 to 12.

14. A device for position measurement, comprising:
- a transmission region;
- a code region; and
- an apparatus (1) according to claim 13, wherein the transmission region, the code region and the detection region are configured in such a manner to be displaced relative to one another in order to generate a relative position signal and a first absolute position signal.

## Revendications

1. Procédé (100, 200) d'étalonnage d'un appareil de mesure de position, consistant à :
- acquérir un premier signal de position absolue (320) ;
- acquérir une première valeur (351) d'un signal de position relative (310) lors d'une première variation du premier signal de position absolue (320) ;
- calculer une première valeur de correction sur la base de la première valeur (351) du signal de position relative (310) ; et
- utiliser la première valeur de correction pour corriger une mesure de position de l'appareil.

2. Procédé (100, 200) selon la revendication 1, consistant en outre à :
- acquérir une deuxième valeur (352) du signal de position relative (310) lors d'une deuxième variation du premier signal de position absolue (320) ; dans lequel le calcul de la première valeur de correction s'effectue sur la base de la première et de la deuxième valeur (351, 352) du signal de position relative.

3. Procédé (100, 200) selon la revendication 2,
dans lequel le calcul de la première valeur de correction comprend un calcul de la moyenne des première et deuxième valeurs (351, 352) du signal de position relative (310).

4. Procédé (100, 200) selon l'une des revendications précédentes, consistant en outre à :
- acquérir un deuxième signal de position absolue (330) ;
- acquérir une troisième valeur (361) du signal de position relative (310) lors d'une première variation du deuxième signal de position absolue (330) ;
- calculer une deuxième valeur de correction sur la base de la troisième valeur (361) du signal de position relative (310) ; et
- utiliser la deuxième valeur de correction pour corriger une mesure de position de l'appareil.

5. Procédé (100, 200) selon la revendication 4, consistant en outre à :
- acquérir une quatrième valeur (362) du signal de position relative (310) lors d'une deuxième variation du deuxième signal de position absolue (330) ;
dans lequel le calcul de la deuxième valeur de correction s'effectue sur la base des troisième et la quatrième valeurs (361, 362) du signal de position relative (310).

6. Procédé (100, 200) selon la revendication 5,
dans lequel le calcul de la deuxième valeur de correction comprend un calcul de la moyenne des troisième et quatrième valeurs (361, 362) du signal de position relative (310).

7. Procédé (100, 200) selon l'une des revendications précédentes, consistant en outre à :
- comparer la première valeur (351) du signal de position relative (310) à une valeur minimale prédéterminée du signal de position relative (310) ; et
- si la première valeur (351) du signal de position relative (310) est inférieure à la valeur minimale prédéterminée du signal de position relative (310) : stocker la première valeur (351) du signal de position relative (310) comme la valeur minimale prédéterminée du signal de position relative (310) ; et
dans lequel le calcul de la première valeur de correction s'effectue sur la base de la valeur minimale prédéterminée du signal de position relative (310).

8. Procédé (100, 200) selon l'une des revendications précédentes, consistant en outre à :
- comparer la première valeur (351) du signal de position relative (310) à une valeur maximale prédéterminée du signal de position relative (310) ; et
- si la première valeur (351) du signal de position relative (310) est supérieure à la valeur maximale prédéterminée du signal de position relative (310) : stocker la première valeur (351) du signal de position relative (310) comme la valeur maximale prédéterminée du signal de position relative (310) ; et
dans lequel le calcul de la première valeur de correction s'effectue sur la base de la valeur maximale prédéterminée du signal de position relative (310).

9. Procédé (100, 200) selon la revendication 8,
dans lequel le calcul de la première valeur de correction comprend un calcul de la moyenne de la valeur minimale prédéterminée et de la valeur maximale prédéterminée du signal de position relative (310).

10. Procédé (100, 200) selon l'une des revendications précédentes,
dans lequel la première variation du premier signal de position absolue (320), la deuxième variation du premier signal de position absolue (320), la première variation du deuxième signal de position absolue (330) et/ou la deuxième variation du deuxième signal de position absolue (330) sont des fronts, en particulier des fronts montants (322) et/ou des fronts descendants (324, 334).

11. Procédé (100, 200) selon l'une des revendications précédentes,
dans lequel la première et/ou la deuxième valeur de correction est utilisée pour corriger un instant d'acquisition du premier signal de position absolue (320) et/ou du deuxième signal de position absolue (330).

12. Procédé (100, 200) selon l'une des revendications précédentes,
dans lequel la première et/ou la deuxième valeur de correction est utilisée pour corriger une valeur seuil d'acquisition du premier signal de position absolue (320) et/ou du deuxième signal de position absolue (330).

13. Dispositif (1) d'étalonnage d'un appareil de mesure de position, comprenant :
- une zone de détection (2) comprenant un premier élément de détection (10) conçu pour acquérir un signal de position relative (310) et un deuxième élément de détection (20) conçu pour acquérir un premier signal de position absolue (320) ;
- un processeur (30) ; et
- une mémoire (40) stockant des instructions amenant le processeur (30) à mettre en œuvre un procédé (100, 200) selon l'une des revendications 1 à 12.

14. Appareil de mesure de position, comprenant :
- une zone d'émission ;
- une zone de code ; et
- un dispositif (1) selon la revendication 13, dans lequel la zone d'émission, la zone de code et la zone de détection sont conçues pour être déplacées les unes par rapport aux autres afin de générer un signal de position relative et un premier signal de position absolue.
